# EUROPÄISCHE PATENTSCHRIFT

(11) **EP 3 568 341 B1**
(45) Veröffentlichungstag und Bekanntmachung des Hinweises auf die Patenterteilung: **19.07.2023**
(21) Anmeldenummer: 18703902.9
(22) Anmeldetag: 16.01.2018
(51) Int. Cl.: B62K 3/00, B62K 3/10, B62K 5/02, B62M 6/55

(54) **LIEGEFAHRRAD**
RECUMBENT BICYCLE
VÉLO COUCHÉ

(30) Priorität: 16.01.2017 DE 102017100722
(43) Veröffentlichungstag der Anmeldung: 20.11.2019
(73) Patentinhaber: Hase, Marec, 45731 Waltrop (DE)
(72) Erfinder: Hase, Marec, 45731 Waltrop (DE)
(74) Vertreter: Schneiders & Behrendt Bochum
(86) Internationale Anmeldenummer: PCT/EP2018/050982
(87) Internationale Veröffentlichungsnummer: WO 2018/130716

(56) Entgegenhaltungen:
- EP-A1- 2 803 565
- DE-U1- 29 618 907
- DE-U1-202013 005 270
- FR-A1- 3 001 701
- JP-A- 2003 182 668
- US-A1- 2007 018 423
- US-A1- 2014 346 752

## Beschreibung

Die Erfindung betrifft ein Liegefahrrad zur Beförderung mindestens einer auf einem Lehnsitz sitzenden Person mit einem zentralen tragenden Holm, an dem befestigt sind:
- mindestens drei Laufräder, von denen mindestens zwei parallel laufende hintere Laufräder am hinteren Teil des tragenden Holms und mindestens ein vorderes Laufrad am vorderen Teil des tragenden Holms angeordnet sind,
- der Lehnsitz
- und mindestens eine Antriebsvorrichtung, welche mittels einer Tretkurbel mit zwei Pedalen und einem Tretlager über einen Zugmitteltrieb mindestens eines der Laufräder antreibt,
- wobei die Antriebsvorrichtung als Antriebsblock (4,13) ausgeführt ist und der Antriebsblock (4,13) lösbar am tragenden Holm (2) befestigt ist

Liegefahrräder dieser Art sind bekannt und besetzen seit vielen Jahren eine Marktnische im Bereich der mit Muskelkraft angetriebenen Fortbewegungsmittel. Ein Vorteil gegenüber klassischen Fahrädern ist die bequeme Position des Fahrers während der Fahrt. Hierdurch können auch längere Touren problemlos absolviert werden. Ähnliche Liegefahrräder sind beispielsweise aus den Druckschriften US 2014/346752 A1 oder der FR 3 001 701 A1 bekannt.

Das in der Druckschrift DE21200900001 0U gezeigt Liegerad zeigt die Merkmale der Präambel des Anspruchs 1.

Die Liegefahrräder werden in Kleinserien produziert. Sowohl bei den einzelnen Materialien und Bauteilen als auch beim Zusammenbau der Liegefahrräder muss auf höchste Qualität und Sorgfalt geachtet werden, da der qualitätsbewusste und -kritische Abnehmerkreis dies erwartet. Hierdurch sind die Produktions- und Materialkosten solcher Liegefahrräder hoch und dementsprechend müssen auch die Verkaufspreise gestaltet werden.

Neben privaten Endkunden gehören auch professionelle Fahrradverleiher zu den Abnehmern solcher Liegefahrräder. Diese vermieten die Liegefahrräder an Einzelpersonen und insbesondere auch an größere Gruppen die kleinere oder auch größere mehrtätige Radtouren unternehmen.

Wie im Bereich der klassischen Fahrräder erlangen auch Elektroliegefahrräder zunehmend Beliebtheit, bei denen der Fahrer von einem Elektroantrieb nur dann unterstützt wird, wenn er gleichzeitig auch selbst in die Pedale tritt, sogenannte Pedelecs. Die Elektroantriebe müssen hier neben dem Elektromotor auch einen Akkumulator aufweisen, um die darin gespeicherte elektrische Energie im Bedarfsfall abrufen zu können. Des Weiteren gehört eine Steuereinheit mit zugehöriger Sensorik zum Elektroantrieb. Für den Motor existieren verschiedene Ausführungsformen und Einsatzorte. Hierbei hat sich der direkt am Tretlager angeordnete Mittelmotor als überlegen gegenüber anderen Motoren und Motorenanordnungen herausgestellt. Durch den Mittelmotor wird eine annähernd gleichmäßige Gewichtsverteilung auf Vorder- und Hinterachse erleichtert und ein geringes Massenträgheitsmoment um die Fahrzeughochachse erreicht, da die Massen um den Fahrzeugschwerpunkt konzentriert sind. Daraus folgt ein ausgewogenes Fahrverhalten, das weder durch Untersteuern (Schräglaufwinkel der Reifen vorn größer als hinten) noch durch Übersteuern (Schräglaufwinkel hinten größer als vorn) gekennzeichnet ist. So sind hohe Kurvengeschwindigkeiten möglich.

Der zusätzliche Elektroantrieb bedeutet für den Hersteller der Liegefahrräder weitere Produktions- und Anschaffungskosten, sodass auch der Verkaufspreis dementsprechend steigt.

Auch bei anderen Bauteilen am Liegefahrrad existieren unterschiedliche technische Ausführungsformen, die mit verschiedenen Kosten verbunden sind, beispielsweise beim Getriebe, beim Sitz oder bei der Federung.

Für den Kunden bedeutet das, dass er beim Kauf entscheiden muss, welche Ausstattung das Liegefahrrad haben soll. Wenn er diese Entscheidung einmal getroffen hat, lassen sich die einzelnen Bauteile des Liegefahrrads nicht mehr bzw. nur mit sehr hohem Aufwand nachrüsten. Insbesondere ein Elektroantrieb mit Mittelmotor lässt sich derzeit bei einem Liegefahrrad gar nicht und bei klassischen Fahrrädern nur mit sehr hohem Aufwand nachrüsten.

Wünschenswert für den privaten Endkunden ist ein kostengünstiges Liegefahrrad als Einsteigermodell, bei dem sich zu einem späteren Zeitpunkt die verschiedenen Bauteile nachrüsten lassen. Für einen professionellen Fahrradverleiher als Endkunden ist es zudem vorteilhaft, wenn er die verschiedenen Bauteile beliebig häufig auswechseln kann, um so auf die unterschiedlichen Anforderungen seiner ständig wechselnden Kundschaft zu reagieren. Insbesondere die Umrüstung auf Betrieb mit Unterstützung durch einen Elektroantrieb ist hierbei von höchstem Interesse.

Es ist daher Aufgabe der Erfindung ein Liegefahrrad der eingangs genannten Art dahingehend weiterzubilden, dass dieses einfach, schnell und kostengünstig auf- und umrüstbar ist.

Zur Lösung dieser Aufgabe schlägt die Erfindung ausgehend von einem Liegefahrrad der eingangs genannten Art vor, dass ein ausschließlich durch Muskelkraft angetriebener Antriebsblock gegen einen mit elektrischer Unterstützung arbeitenden Antriebsblock austauschbar ist, wobei der mit elektrischer Unterstützung arbeitende Antriebsblock mit einem Akkumulator versehen ist. Da der Antriebsblock en bloc austauschbar sein muss, um die schnelle und einfache Umrüstung zu gewährleisten, wird das Tretlager nicht wie bei bekannten Liegefahrrädern durch den tragenden Holm geführt, sondern befindet sich darüber oder darunter. Somit kann das Auf- bzw. Umrüsten durch den Austausch des Antriebsblocks des Liegefahrrads ohne großen Aufwand durchgeführt werden.

Das herkömmliche Liegefahrrad ist ohne großen Aufwand zum Liegepedelec umrüstbar.

Den Akkumulator an anderer geeigneter Stelle am Liegefahrrad unterzubringen und über ein Kabel mit dem Antriebsblock zu verbinden, würde den Montageaufwand bei der Umrüstung erheblich vergrößern.

Der tragende Holm muss Anschlussstellen haben, die für die unterschiedlichen Antriebsblöcke geeignet sind, weil diese in Form und Gewicht stark variieren können.

Aus diesem Grund sieht eine Weiterbildung der Erfindung vor, dass der tragende Holm mindestens zwei Nuten entlang seiner Längsachse aufweist. Somit können Antriebsblöcke verschiedenster Ausführungsform an dem tragenden Holm lösbar befestigt werden.

Zudem ist es vorteilhaft, wenn der Antriebsblock Anschlussplatten mit offenen Langlöchern zur Befestigung des Antriebsblocks mittels Schrauben am tragenden Holm aufweist. Somit lässt sich der gesamte Antriebsblock ohne Herausdrehen der Schrauben einfach durch Abziehen eines alten Antriebsblocks und Aufstecken eines neuen Antriebsblocks am tragenden Holm umrüsten.

Es ist besonders vorteilhaft, wenn der tragende Holm zwischen der Befestigung des Lehnsitzes und des Antriebsblocks eine nach oben weisende Abknickung aufweist. Hierdurch ist es möglich, den Antriebsblock und insbesondere die Pedale für den Nutzer in eine ergonomisch günstige Position zu bringen, sodass dieser eher nach unten als in der Waagerechten in die Pedale tritt. Durch die nach oben weisende Abknickung ist die optimale Aufhängung des vorderen Laufrades trotzdem gewährleistet. Zudem ist der Einstieg auf das Liegefahrrad für den Nutzer bequemer, da der tragende Holm tiefer liegt.

Eine weitere bevorzugte Ausführungsform sieht vor, dass die beiden hinteren Laufräder über einen Hinterbau lösbar am tragenden Holm befestigt sind. Durch diesen Hinterbau lassen sich die hinteren Räder paarweise austauschen und können somit beispielsweise von Cross- auf Straßenräder umgerüstet werden. Auch die Federung über die Aufhängung der Räder am Hinterbau kann Hierbei variieren.

Des Weiteren ist es sinnvoll, wenn der Lehnsitz lösbar am Hinterbau und am tragenden Holm befestigt ist. Auf diese Weise werden die bei der Fahrt entstehenden Kräfte auf die Gesamtkonstruktion über den tragenden Holm und über den Hinterbau optimal auf die Laufräder verteilt.

Eine zweckmäßige Weiterbildung sieht vor, dass die Achsen der beiden Laufräder am Hinterbau einzeln lösbar befestigt sind. Hierdurch können das hintere Antriebszahnrad bzw. die hintere Zahnradkassette auf einfache Art und Weise getauscht werden. Zudem ist die Nachrüstung eines Differentialgetriebes ist möglich.

Zudem ist es vorteilhaft, wenn der tragende Holm teilbar ist. Hierdurch ergeben sich Transportvorteile sowohl beim Transport zum jeweiligen Einsatzort des fertigen Liegefahrrades durch den Endkunden als auch bei der Anlieferung zum Liegefahrradproduzenten bzw. -händler.

Im Folgenden wird ein Ausführungsbeispiel der Erfindung anhand von Zeichnungen näher dargestellt:
Es zeigt:
- Fig.1:: Schematisch eine 3D-Ansicht eines Liegefahrrads gemäß der Erfindung
- Fig.2:: Schematisch die Umrüstung des Antriebsblocks des Liegefahrrads aus Fig.1 in Seitenansicht
- Fig.3:: Schematisch die Umrüstung des Getriebes des Liegefahrrads aus Fig.1 in Rückansicht

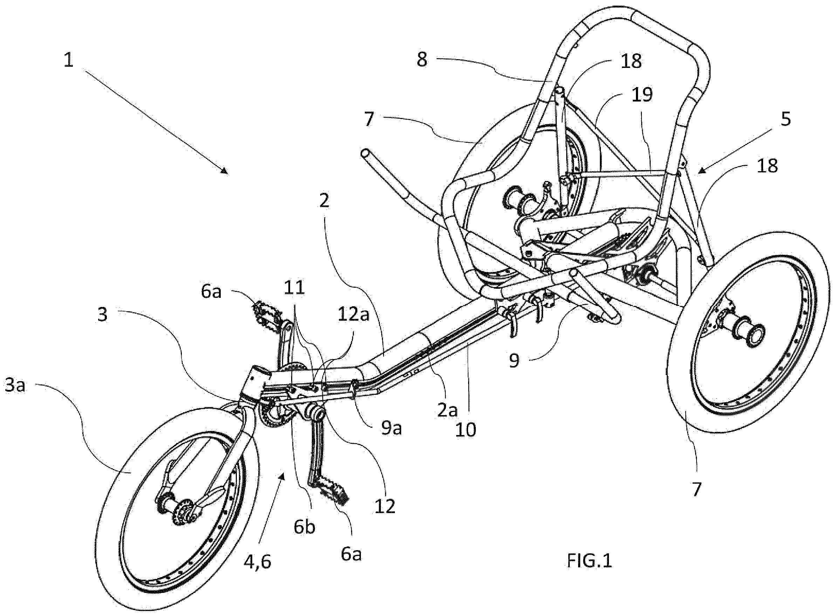

In Figur 1 ist ein Liegefahrrad 1 gemäß der Erfindung dargestellt. Es weist einen langestreckten, zentralen tragenden Holm 2 auf. Der tragende Holm 2 hat ein rohrförmiges Querprofil und zwei sich gegenüberliegende und sich seiner Längsachse entlang erstreckende Nuten 2a.

Am vorderen Ende des tragenden Holms 2 ist eine Vorderradgabel 3 schwenkbar befestigt. In der Vorderradgabel 3 ist ein vorderes Laufrad 3a drehbar gelagert. Des Weiteren sind im vorderen Bereich des tragenden Holms 2 ein Antriebsblock 4 und im hinteren Bereich des tragenden Holms 2 ein Hinterbau 5 befestigt. Schließlich weist er im vorderen Bereich eine Abknickung nach oben auf. Hierdurch wird unter anderem der Einstieg für den Fahrer erleichtert.

Der Antriebsblock 4 weist eine Tretkurbel 6 mit zwei Pedalen 6a und einem Tretlager 6b auf, durch die das Liegefahrrad 1 über ein Kettengetriebe angetrieben wird. Das zur Tretkurbel 6 gehörende Tretlager 6b ist unter dem tragenden Holm 2 angeordnet.

Der Hinterbau 5 weist eine Rahmenkonstruktion 5a auf, an der wiederum zwei hintere Laufräder 7, ein Lehnsitz 8 und eine Lenkerstange 9 befestigt sind. Der Lehnsitz 8 ist zusätzlich am tragenden Holm 2 befestigt. Der Fahrer kann während der Fahrt auf dem Lehnsitz 8 sitzend über eine Lenkübertragungsstange 10 mittels der Lenkerstange 9 die Vorderradgabel 3 verschwenken und somit das Liegefahrrad 1 steuern. Die Lenkübertragungsstange 10 ist hierbei etwa in Höhe der Abknickung des tragenden Holms 2 durch eine an dem tragenden Holm 2 befindliche Führungsöse 9a geführt. Hierdurch kann die Lenkübertragungsstange 10 relativ dünn ausgelegt werden, sodass die Lenkübertragungsstange 10 eng an der Tretkurbel 6 vorbeigeführt werden kann.

Die Gewichtskraft des Fahrers wird hauptsächlich über den Hinterbau 5 auf die hinteren Laufräder 7 übertragen. Die durch das Treten der Pedale 6a erzeugte Zugkraft auf den Hinterbau 5 und die daran befestigten Bauteile müssen von den Verbindungen zwischen Hinterbau 5 und tragendem Holm 2 sowie zwischen Lehnsitz 8 und tragendem Holm 2 abgefangen werden, damit sich Hinterbau 5 und Lehnsitz 6 nicht nach vorne schieben und das Liegefahrrad 1 hierdurch funktionsunfähig wird. Dementsprechend sind die Befestigungen auszulegen. Der gesamte Hinterbau 5 samt Lehnsitz 8 kann aber auch weiter vorne am tragenden Holm 2 befestigt werden, sodass das Liegefahrrad 1 auch für Personen anderer Körpergröße geeignet ist.

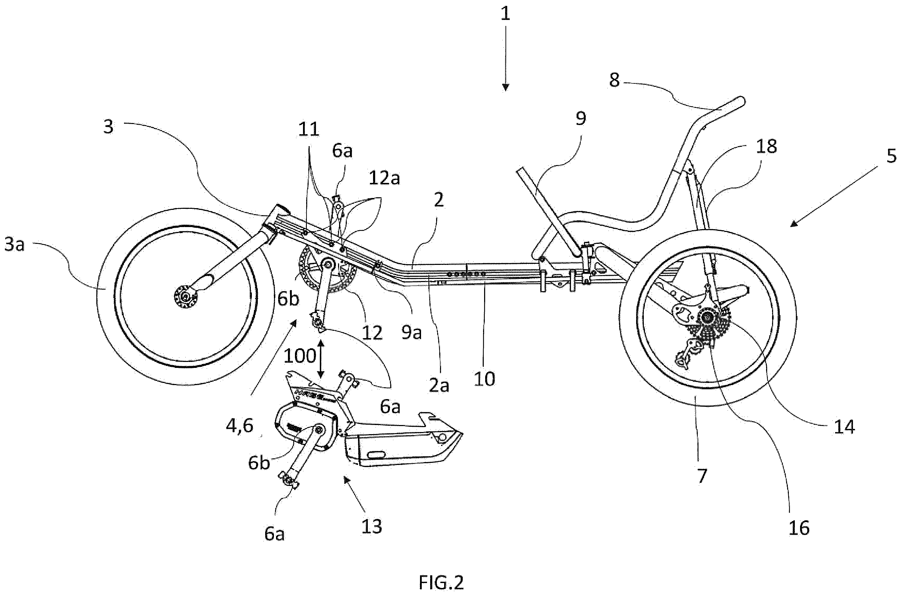

Figur 2 zeigt das Liegefahrrad 1 aus Figur 1 in Seitenansicht. Der Antriebsblock 4 ist über Schraubverbindungen 11 am tragenden Holm 2 befestigt. Die Anschlussplatte 12 des Antriebsblocks 4 weist mehrere offene Langlöcher 12a auf. Der Antriebsblock 4 kann durch lösen der Schraubverbindungen 11 leicht abmontiert werden. Anstelle des ausschließlich durch Muskelkraft angetriebenen Antriebsblocks 4 kann nun ein mit elektrischer Unterstützung (Mittelmotor) arbeitender Antriebsblock 13 an dem tragenden Holm 2 befestigt werden. Zusätzlich ist der Antriebsblock 13 noch mit einem Akkumulator versehen. Der Austausch der Antriebsblöcke 4,13 wird mit dem Pfeil 100 symbolisiert.

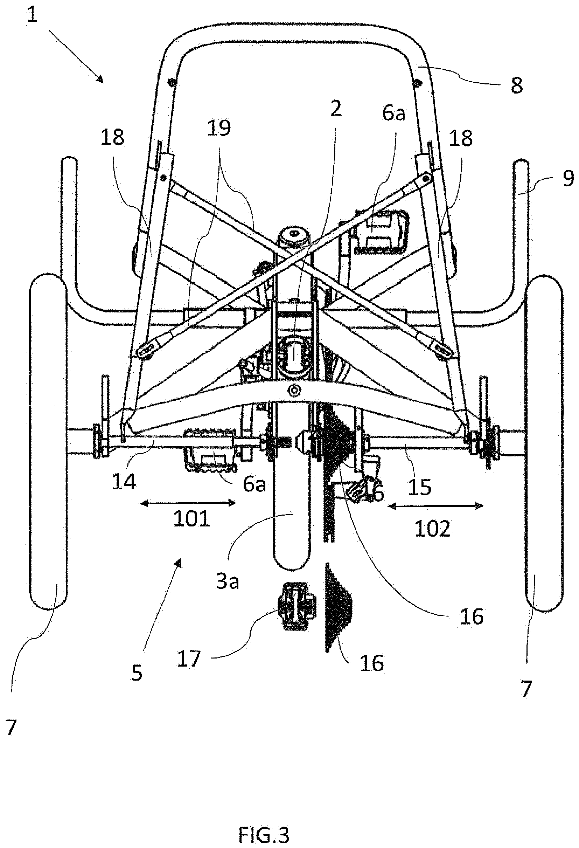

Figur 3 zeigt das Liegefahrrad 1 aus Figur 1 in Rückansicht. Wie in der Figur 3 zu sehen ist, sind die Achsen 14,15 der hinteren Laufräder einzeln seitlich rausschiebbar befestigt (symbolisiert durch Pfeile 101,102). Somit kann beispielsweise eine andere Zahnradkassette 16 oder auch ein Differentialgetriebe 19 nachgerüstet werden.

Zudem ist zu sehen, dass der Lehnsitz 8 über teleskopierbare Rohre 18 am Hinterbau 5 abgestützt ist. Durch die teleskopierbaren Rohre 18 lässt sich die Neigung des Lehnsitzes 8 verstellen. Zwischen den teleskopierbaren Rohren 18 ist ein Stützkreuz 19 vorgesehen. Dieses Stützkreuz 19 ist notwendig um die Kurvenkräfte bei der Fahrt aufzunehmen. Da sich die Anschlusspunkte des Stützkreuzes 19 an den teleskopierbaren Rohren 18 aufgrund der unterschiedlichen Längeneinstellungen dieser verschieben können, sind die Stangen des Stützkreuzes 19 an ihren oberen Enden mit Langlöchern versehen, sodass diese auf die verschiedenen Stellungen der teleskopierbaren Rohre 18 eingestellt werden können.

### Bezugszeichenliste:

- 1: Liegefahrrad
- 2: tragender Holm
- 2a: Nuten am tragenden Holm
- 3: Vorderradgabel
- 3a: vorderes Laufrad
- 4: Antriebsblock
- 5: Hinterbau
- 6: Tretkurbel
- 6a: Pedal
- 6b: Tretlager
- 7: hinteres Laufrad
- 8: ein Lehnsitz
- 9: Lenkerstange
- 9a: Führungsöse
- 10: Lenkübertragungsstange
- 11: Schraubverbindung
- 12: Anschlussplatte
- 12a: offenes Langloch
- 13: Antriebsblock mit Mittelmotor
- 14: Achse eines der hinteren Laufräder
- 15: Achse eines der hinteren Laufräder
- 16: Zahnradkassette
- 17: Differentialgetriebe
- 18: teleskopierbares Rohr
- 19: Stützkreuz
- 100: Symbolpfeil
- 101: Symbolpfeil
- 102: Symbolpfeil

## Patentansprüche

1. Liegefahrrad (1) zur Beförderung mindestens einer sitzenden Person umfassend:
a) einen zentralen tragenden Holm (2), an welchem befestigt sind
- mindestens drei Laufräder, von denen mindestens zwei parallel laufende hintere Laufräder (7) am hinteren Teil des tragenden Holms (2) und mindestens ein vorderes Laufrad (3a) am vorderen Teil des tragenden Holms (2) angeordnet sind,
- und ein Lehnsitz (8),
b) weiterhin eine erste Antriebsvorrichtung,
- mit einer Tretkurbel (6.1) mit zwei Pedalen (6.1a) und einem Tretlager (6.1b), welche über einen Zugmitteltrieb mindestens eines der Laufräder antreiben,
- wobei diese erste Antriebsvorrichtung als ausschließlich mit Muskelkraft angetriebener Antriebsblock (4) ausgeführt ist, welcher lösbar am tragenden Holm (2) befestigbar ist und
c) **gekennzeichnet durch** eine gegen die erste Antriebsvorrichtung austauschbare zweite Antriebsvorrichtung,
- mit einer Tretkurbel (6.2) mit zwei Pedalen (6.2a) und einem Tretlager (6.2b), welche einen Zugmitteltrieb mindestens eines der Laufräder (7) antreiben,
- wobei diese zweite Antriebsvorrichtung als ein mit elektrischer Unterstützung arbeitenden Antriebsblock (13) ausgeführt ist,
- lösbar am tragenden Holm (2) befestigbar ist
- und wobei der zweite Antriebsblock mit einem Akkumulator versehen ist.

2. Liegefahrrad nach Anspruch 1 , **dadurch gekennzeichnet, dass** der tragende Holm (2) mindestens zwei Nuten (2a) entlang seiner Längsachse aufweist.

3. Liegefahrrad nach Anspruch 2, **dadurch gekennzeichnet, dass** der Antriebsblock (4,13) mindestens zwei Anschlussplatten (12) mit offenen Langlöchern (7) zur Befestigung des Antriebsblocks (4,13) mittels Schrauben am tragenden Holm (2) aufweist.

4. Liegefahrrad nach einem der vorgenannten Ansprüche, **dadurch gekennzeichnet, dass** der tragende Holm (2) zwischen der Befestigung des Lehnsitzes (8) und des Antriebsblocks (4,13) eine nach oben weisende Abknickung aufweist.

5. Liegefahrrad nach einem der vorgenannten Ansprüche, **dadurch gekennzeichnet, dass** der Antriebsblock (4,13) mittels Schraubverbindungen (11) am tragenden Holm (2) festlegbar ist.

6. Liegefahrrad nach einem der vorgenannten Ansprüche, **dadurch gekennzeichnet, dass** die beiden hinteren Laufräder (7) über einen Hinterbau (5) lösbar am tragenden Holm (2) befestigt sind.

7. Liegefahrrad nach einem der vorgenannten Ansprüche, **dadurch gekennzeichnet, dass** der Lehnsitz (8) lösbar am Hinterbau (5) und am tragenden Holm (2) befestigt ist.

8. Liegefahrrad nach einem der vorgenannten Ansprüche, **dadurch gekennzeichnet, dass** die Achsen der beiden hinteren Laufräder (7) am Hinterbau (5) einzeln lösbar befestigt sind.

9. Liegefahrrad nach einem der vorgenannten Ansprüche, **dadurch gekennzeichnet, dass** der tragende Holm (2) teilbar ist.

## Claims

1. Recumbent bicycle (1) for transporting at least one seated person, comprising:
a) a central support beam (2), to which are attached
- at least three running wheels, of which at least two rear running wheels (7) running in parallel are arranged on the rear part of the support beam (2) and at least one front running wheel (3a) is arranged on the front part of the support beam (2),
- and a backrest seat (8),
b) further a first drive device
- having a crankset (6.1) having two pedals (6.1a) and a bottom bracket (6.1b), which drive at least one of the running wheels via a traction mechanism,
- wherein said first drive device is configured as a drive block (4) driven exclusively by muscle power, which is detachably attachable to the support beam (2), and
c) **characterised by** a second drive device replaceable by the first drive device,
- having a crankset (6.2) having two pedals (6.2a) and a bottom bracket (6.2b), which drive a traction mechanism of at least one of the running wheels (7),
- wherein said second drive device is configured as a drive block (13) operating with electric assistance,
- is detachably attachable to the support beam (2)
- and wherein the second drive block is provided with a battery.

2. Recumbent bicycle according to claim 1, **characterised in that** the support beam (2) comprises at least two grooves (2a) along its longitudinal axis.

3. Recumbent bicycle according to claim 2, **characterised in that** the drive block (4, 13) comprises at least two connecting plates (12) having open elongated holes (7) for attaching the drive block (4, 13) to the support beam (2) by means of screws.

4. Recumbent bicycle according to any one of the preceding claims, **characterised in that** the support beam (2) comprises a bend pointing upwards between the attachment of the backrest seat (8) and the drive block (4, 13).

5. Recumbent bicycle according to any one of the preceding claims, **characterised in that** the drive block (4, 13) is fixable to the support beam (2) by means of screw connections (11).

6. Recumbent bicycle according to any one of the preceding claims, **characterised in that** the two rear running wheels (7) are detachably attached to the support beam (2) via a rear triangle (5).

7. Recumbent bicycle according to any one of the preceding claims, **characterised in that** the backrest seat (8) is detachably attached to the rear triangle (5) and to the support beam (2).

8. Recumbent bicycle according to any one of the preceding claims, **characterised in that** the axles of the two rear running wheels (7) are individually detachably attached to the rear triangle (5).

9. Recumbent bicycle according to any one of the preceding claims, **characterised in that** the support beam (2) can be divided.

## Revendications

1. Vélo couché (1) destiné au transport d'au moins une personne assise, comprenant :
a) un longeron de support (2) central, sur lequel sont fixés
- au moins trois roues de roulement, dont au moins deux roues de roulement arrière (7) roulant de manière parallèle sont disposées sur la partie arrière du longeron de support (2) et au moins une roue de roulement avant (3a) est disposée sur la partie avant du longeron de support (2),
- et un siège à dossier (8),
b) par ailleurs un premier dispositif d'entraînement
- avec un pédalier (6.1) avec deux pédales (6.1a) et un jeu de pédalier (6.1b), lesquels entraînent au moins une des roues de roulement par l'intermédiaire d'un mécanisme de traction,
- dans lequel ledit premier dispositif d'entraînement est réalisé en tant que bloc d'entraînement (4) entraîné exclusivement à la force des muscles, lequel peut être fixé de manière amovible sur le longeron de support (2), et
c) **caractérisé par** un deuxième dispositif d'entraînement pouvant être remplacé par le premier dispositif d'entraînement,
- avec un pédalier (6.2) avec deux pédales (6.2a) et un jeu de pédalier (6.2b), lesquels entraînent un mécanisme de traction d'au moins une des roues de roulement (7),
- dans lequel ledit deuxième dispositif d'entraînement est réalisé en tant qu'un bloc d'entraînement (13) fonctionnant avec une assistance électrique,
- peut être fixé de manière amovible sur le longeron de support (2)
- et dans lequel le deuxième bloc d'entraînement est pourvu d'un accumulateur.

2. Vélo couché selon la revendication 1, **caractérisé en ce que** le longeron de support (2) présente au moins deux rainures (2a) le long de son axe longitudinal.

3. Vélo couché selon la revendication 2, **caractérisé en ce que** le bloc d'entraînement (4, 13) présente au moins deux plaques de raccordement (12) avec des trous oblongs ouverts (7) destinés à fixer le bloc d'entraînement (4, 13) au moyen de vis sur le longeron de support (2).

4. Vélo couché selon l'une quelconque des revendications précédentes, **caractérisé en ce que** le longeron de support (2) présente un coude pointant vers le haut entre la fixation de l'assise à dossier (8) et du bloc d'entraînement (4, 13).

5. Vélo couché selon l'une quelconque des revendications précédentes, **caractérisé en ce que** le bloc d'entraînement (4, 13) peut être immobilisé sur le longeron de support (2) au moyen de liaisons par vissage (11).

6. Vélo couché selon l'une quelconque des revendications précédentes, **caractérisé en ce que** les deux roues de roulement arrière (7) sont fixées de manière amovible sur le longeron de support (2) par l'intermédiaire d'un triangle arrière (5).

7. Vélo couché selon l'une quelconque des revendications précédentes, **caractérisé en ce que** l'assise à dossier (8) est fixée de manière amovible sur le triangle arrière (5) et sur le longeron de support (2).

8. Vélo couché selon l'une quelconque des revendications précédentes, **caractérisé en ce que** les essieux des deux roues de roulement arrière (7) sont fixés individuellement de manière amovible sur le triangle arrière (5).

9. Vélo couché selon l'une quelconque des revendications précédentes, **caractérisé en ce que** le longeron de support (2) peut être divisé.
